# EUROPEAN PATENT APPLICATION

(11) **EP 4 757 452 A1**
(43) Date of publication of application: **10.06.2026**
(21) Application number: 24848271.3
(22) Date of filing: 30.07.2024
(51) Int. Cl.: H04W 72/0446

(54) **TRANSMISSION RESTRICTION ADJUSTMENT METHOD AND APPARATUS, TERMINAL, NETWORK SIDE DEVICE, AND MEDIUM**

(30) Priority: 03.08.2023 CN 202310977011
(71) Applicant: Vivo Mobile Communication Co., Ltd., Dongguan, Guangdong 523863 (CN)
(72) Inventor: CHEN, Xiaohang, Dongguan, Guangdong 523863 (CN); PAN, Xueming, Dongguan, Guangdong 523863 (CN)
(74) Representative: Walaski, Jan Filip
(86) International application number: PCT/CN2024/108531
(87) International publication number: WO 2025/026316

(57) **Abstract**

The present application relates to the technical field of communications, and discloses a transmission restriction adjustment method and apparatus, a terminal, a network side device, and a medium. The transmission restriction adjustment method according to embodiments of the present application comprises: a terminal receives first instruction information sent by a network side device, wherein the first instruction information is used for instructing whether to deactivate a first time region, and the first time region comprises at least one first time unit for performing transmission restriction on the terminal; and when the first instruction information instructs to deactivate the first time region, the terminal deactivates at least some of the first time units in the first time region on the basis of a target moment, wherein the target moment is determined on the basis of the information receiving moment of the first instruction information.

## Description

### CROSS-REFERENCE TO RELATED APPLICATIONS

This application claims priority to Chinese Patent Application No. 202310977011.4, filed in China on August 3, 2023, which is incorporated herein by reference in its entirety.

### TECHNICAL FIELD

This application pertains to the field of communication technology, and specifically, relates to a transmission restriction adjustment method and apparatus, a terminal, a network-side device, and a medium.

### BACKGROUND

Currently, within a scheduling restriction time region, uplink transmission or downlink transmission of a terminal is subject to necessary restrictions to reduce impact on measurements.

However, when the terminal performs transmission of a low-latency service within the scheduling restriction time region, due to restriction in the uplink transmission or downlink transmission of the terminal, the transmission of the low-latency service is interrupted, affecting normal operation of the low-latency service.

### SUMMARY

Embodiments of this application provide a transmission restriction adjustment method and apparatus, a terminal, a network-side device, and a medium, to solve a problem that a low-latency service cannot operate normally due to restrictions in uplink transmission or downlink transmission of the terminal.

According to a first aspect, a transmission restriction adjustment method, executed by a terminal, is provided. The method includes: receiving, by the terminal, first indication information sent by a network-side device, where the first indication information is used to indicate whether to deactivate a first time region, and the first time region includes at least one first time unit in which transmission restriction is applied to the terminal; and in a case that the first indication information indicates to deactivate the first time region, deactivating, by the terminal, at least part of the first time units in the first time region based on a target time, where the target time is determined based on an information reception time of the first indication information.

According to a second aspect, a transmission restriction adjustment method, executed by a network-side device, is provided. The method includes: sending, by the network-side device, first indication information to a terminal; where the first indication information is used to indicate whether to deactivate a first time region, and the first time region includes at least one first time unit in which transmission restriction is applied to the terminal.

According to a third aspect, a transmission restriction adjustment apparatus is provided. The apparatus includes a receiving module and a processing module; where the receiving module is configured to receive first indication information sent by a network-side device, where the first indication information is used to indicate whether to deactivate a first time region, and the first time region includes at least one first time unit in which transmission restriction is applied to a terminal; and the processing module is configured to, in a case that the first indication information indicates to deactivate the first time region, deactivate at least part of the first time units in the first time region based on a target time, where the target time is determined based on an information reception time of the first indication information.

According to a fourth aspect, a transmission restriction adjustment apparatus is provided. The apparatus includes a sending module; where the sending module is configured to send first indication information to a terminal; where the first indication information is used to indicate whether to deactivate a first time region, and the first time region includes at least one first time unit in which transmission restriction is applied to the terminal.

According to a fifth aspect, a terminal is provided. The terminal includes a processor and a memory, where the memory stores a program or instructions capable of running on the processor, and the program or instructions, when executed by the processor, implement the steps of the method according to the first aspect.

According to a sixth aspect, a terminal is provided, including a processor and a communication interface, where the communication interface is configured to receive first indication information sent by a network-side device, where the first indication information is used to indicate whether to deactivate a first time region, and the first time region includes at least one first time unit in which transmission restriction is applied to the terminal; and the processor is configured to, in a case that the first indication information indicates to deactivate the first time region, deactivate at least part of the first time units in the first time region based on a target time, where the target time is determined based on an information reception time of the first indication information.

According to a seventh aspect, a network-side device is provided. The network-side device includes a processor and a memory, where the memory stores a program or instructions capable of running on the processor, and the program or instructions, when executed by the processor, implement the steps of the method according to the second aspect.

According to an eighth aspect, a network-side device is provided, including a processor and a communication interface, where the communication interface is configured to send first indication information to a terminal; where the first indication information is used to indicate whether to deactivate a first time region, and the first time region includes at least one first time unit in which transmission restriction is applied to the terminal.

According to a ninth aspect, a readable storage medium is provided, where the readable storage medium stores a program or instructions, and the program or instructions, when executed by a processor, implement the steps of the method according to the first aspect, or implement the steps of the method according to the second aspect.

According to a tenth aspect, a wireless communication system is provided, including: a terminal and a network-side device, where the terminal may be configured to perform the steps of the method according to the first aspect, and the network-side device may be configured to perform the steps of the method according to the second aspect.

According to an eleventh aspect, a chip is provided. The chip includes a processor and a communication interface, where the communication interface is coupled to the processor, and the processor is configured to run a program or instructions to implement the method according to the first aspect, or to implement the method according to the second aspect.

According to a twelfth aspect, a computer program/program product is provided, where the computer program/program product is stored in a storage medium, and the program/program product is executed by at least one processor to implement the steps of the method according to the first aspect, or to implement the steps of the method according to the second aspect.

In the embodiments of this application, a terminal may receive first indication information sent by a network-side device, where the first indication information is used to indicate whether to deactivate a first time region, and the first time region includes at least one first time unit in which transmission restriction is applied to the terminal; and in a case that the first indication information indicates to deactivate the first time region, the terminal deactivates at least part of the first time units in the first time region based on a target time, where the target time is determined based on an information reception time of the first indication information. Through this solution, since the terminal can deactivate, based on the indication and information reception time of the first indication information, at least part of the first time units in which transmission restriction is applied to the terminal in the first time region, transmission restriction on the terminal can be relaxed within the at least part of the first time units. This can prevent the interruption of transmission of low-latency services transmitted within the at least part of the first time units, thereby ensuring normal operation of the low-latency services.

### BRIEF DESCRIPTION OF DRAWINGS

FIG. 1 is a block diagram of a wireless communication system to which embodiments of this application are applicable;
FIG. 2 is a schematic diagram of a network controlled small gap (Network Controlled Small Gap, NCSG) parameter in related art;
FIG. 3 is a flowchart of a transmission restriction adjustment method according to an embodiment of this application;
FIG. 4 is one of schematic diagrams of a transmission restriction adjustment method according to an embodiment of this application;
FIG. 5 is a second schematic diagram of a transmission restriction adjustment method according to an embodiment of this application;
FIG. 6 is a third schematic diagram of a transmission restriction adjustment method according to an embodiment of this application;
FIG. 7 is a fourth schematic diagram of a transmission restriction adjustment method according to an embodiment of this application;
FIG. 8 is a fifth schematic diagram of a transmission restriction adjustment method according to an embodiment of this application;
FIG. 9 is a flowchart of another transmission restriction adjustment method according to an embodiment of this application;
FIG. 10 is a schematic structural diagram of a transmission restriction adjustment apparatus according to an embodiment of this application;
FIG. 11 is a schematic structural diagram of another transmission restriction adjustment apparatus according to an embodiment of this application;
FIG. 12 is a schematic diagram of a communication device according to an embodiment of this application;
FIG. 13 is a schematic diagram of a hardware structure of a terminal according to an embodiment of this application; and
FIG. 14 is a schematic diagram of a hardware structure of a network-side device according to an embodiment of this application.

### DESCRIPTION OF EMBODIMENTS

The following describes the technical solutions in the embodiments of this application clearly with reference to the accompanying drawings in the embodiments of this application. Apparently, the described embodiments are some but not all of the embodiments of this application. All other embodiments obtained by persons of ordinary skill in the art based on the embodiments of this application fall within the protection scope of this application.

The terms "first", "second", and the like in this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "or" in this application represents at least one of connected objects. For example, "A or B" covers three schemes, that is, scheme 1: including A and not including B; scheme 2: including B and not including A; and scheme 3: including both A and B. The character "/" generally indicates that the associated objects have an "or" relationship.

The term "indication" in this application may be a direct indication (or explicit indication) or an indirect indication (or implicit indication). A direct indication may be understood as a sender explicitly informing a receiver of content such as specific information, an operation to be performed, or a request result in a sent indication; an indirect indication may be understood as a receiver determining corresponding information based on an indication sent by a sender, or making a judgment and determining an operation to be performed, a request result, or the like based on a judgment result.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustration purpose, and NR terms are used in most of the following descriptions, although these technologies may also be applied to other applications than an NR system application, for example, the 6th generation (6^{th} Generation, 6G) communication system.

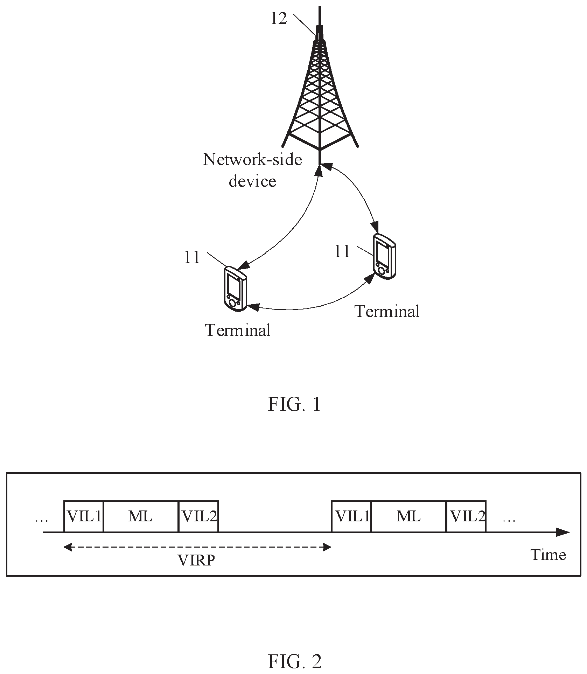

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), smart household (home devices with wireless communication functions, such as refrigerators, televisions, washing machines, or furniture), a game console, a personal computer (Personal Computer, PC), a teller machine, or a self-service machine. The wearable device includes a smartwatch, a smart band, smart earphones, smart glasses, smart jewelry (a smart bracelet, a smart band, a smart ring, a smart necklace, a smart leglet, a smart anklet, and the like), a smart wristband, smart clothing, or the like. The vehicle user equipment may also be referred to as an in-vehicle terminal, an in-vehicle controller, an in-vehicle module, an in-vehicle component, an in-vehicle chip, an in-vehicle unit, or the like. It should be noted that the terminal 11 is not limited to a specific type in the embodiments of this application. The network-side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or other suitable terms in the field. Provided that the same technical effect is achieved, the base station is not limited to specific technical terms. It should be noted that in the embodiments of this application, only the base station in the NR system is used as an example for description, but the specific type of the base station is not limited.

The following describes in detail a transmission restriction adjustment method and apparatus, a terminal, a network-side device, and a medium according to the embodiments of this application by using some embodiments and application scenarios thereof with reference to the accompanying drawings.

Extended reality (eXtended Reality, XR) refers to all real and virtual combined environments and human-machine interactions generated by computer technology and wearable devices. XR includes augmented reality (Augmented Reality, AR), mixed reality (Mixed Reality), virtual reality (Virtual Reality, VR), and the like, as well as their intersecting fields. The levels of the virtual world range from partial sensory input to fully immersive virtual reality. A key aspect of XR is the extension of human experience, especially experiences related to presence (represented by VR) and cognitive acquisition (represented by AR).

For VR services, uplink mainly involves transmission of dense small data packets, and these small data packets can carry gesture, control, and other information as the input and reference for downlink presentation data; downlink mainly involves transmission of multimedia data such as video and audio, and the timely reception and presentation of these multimedia data provide users with immersive experience. Taking downlink video data as an example, video data can be modeled as frame-rate-based video frames, where a typical value of the frame rate is 60 or 120. These video frames arrive periodically or quasi-periodically based on the period determined by the frame rate, and the size of the video frames can change dynamically. Generally, each video frame is required to be successfully transmitted within 10 ms over the air interface, and the transmission success rate is required to be not less than 99% or even 99.9%. In addition, downlink video data generally requires very high data rates, generally reaching tens or even hundreds of Mbps.

For AR services, in addition to the transmission of dense small data packets mentioned above, uplink may also involve transmission of multimedia data such as video, audio, and scene images. The service characteristics are similar to those in downlink, usually the data rate is relatively low (with the typical value of 10/20 Mbps), and the time limit for air interface transmission can also be relaxed. For example, each video frame is required to be successfully transmitted within 30 ms. The downlink data transmission characteristics are basically consistent with those for VR services.

During data transmission, a terminal usually also needs to perform measurement. To avoid data transmission conflicts, a Gap (that is, gap) mechanism is introduced in NR. The Gap mechanism is described in detail below.

### I. Configuration of basic measurement gap

If the terminal needs a measurement gap to identify and measure at least one of an intra-frequency E-UTRAN cell, an inter-frequency E-UTRAN cell, and an inter-RAT E-UTRAN cell:
1. If the terminal does not support independent measurement gap patterns for different frequency ranges, a network needs to provide an independent measurement gap pattern for each terminal to simultaneously monitor all frequency layers.
2. If the terminal supports independent measurement gap patterns for different frequency ranges, the network needs to provide a measurement gap for each frequency range required by the terminal to simultaneously monitor all frequency layers in each frequency range; or provide an independent measurement gap pattern for each frequency range to simultaneously monitor all frequency ranges of all frequency layers to provide a measurement gap pattern for a single terminal.

### II. Terminal behavior when measurement gaps are configured

During each terminal measurement gap, the terminal:
for E-UTRA-NR dual connectivity, except for signals used for radio resource management (Radio Resource Management, RRM) measurements and random access procedures, does not need to receive/transmit signals from/to the corresponding E-UTRAN PCell, E-UTRAN SCell(s) and NR serving cells;
for carrier aggregation, except for signals used for RRM measurements, positioning reference signal (Positioning Reference Signal, PRS) measurements, and random access procedures, does not need to receive/transmit signals from/to the corresponding NR serving cells;
for NR-E-UTRA dual connectivity, except for signals used for RRM measurements, PRS measurements, and random access procedures, does not need to receive/transmit signals from/to the corresponding PCell, SCell(s) and E-UTRAN serving cells; and
for NR-DC, except for signals used for RRM measurements, PRS measurements, and random access procedures, does not need to receive/transmit signals from/to the corresponding NR serving cells.

During each frequency range measurement gap, the terminal:
for E-UTRA-NR dual connectivity, in the E-UTRAN PCell, E-UTRAN SCell(s), and NR serving cells within the corresponding frequency range, except for signals used for RRM measurements and random access procedures, does not need to perform reception/transmission;
for carrier aggregation, in the corresponding NR serving cells within the corresponding frequency range, except for signals used for RRM measurements, PRS measurements, and random access procedures, does not need to perform reception/transmission;
for NR-E-UTRA dual connectivity, in the PCell, SCell(s), and E-UTRAN serving cells within the corresponding frequency range, except for signals used for RRM measurements, PRS measurements, and random access procedures, does not need to perform reception/transmission; and
for NR-DC, in the corresponding NR serving cells within the corresponding frequency range, except for signals used for RRM measurements, PRS measurements, and random access procedures, does not need to perform reception/transmission.

### III. Derivative/Enhanced mechanisms of measurement gap

On the basis of the above configuration and terminal behavior, NR further introduces the following derivative or enhanced mechanisms:

### 1. Measurement gap sharing

When either intra-frequency measurement or inter-frequency measurement needs to occupy a measurement gap, or affects the use of a measurement gap, sharing of a measurement gap between intra-frequency measurement and inter-frequency measurement needs to be considered.

Specifically, when the following conditions are simultaneously met based on the terminal granularity or frequency range granularity, measurement gap sharing for the above configuration is applied:
condition 1: intra-frequency measurement needs to occupy a measurement gap, or affects the use of a measurement gap;
condition 2: inter-frequency measurement or inter-system measurement needs to occupy a measurement gap, or inter-frequency measurement does not need to occupy a measurement gap but affects the use of the measurement gap; and
condition 3: the terminal is configured to measure positioning frequency layers.

Measurement gap sharing is controlled through a network-configured radio resource control (Radio Resource Control, RRC) parameter MeasGapSharingScheme.

### 2. Pre-configured measurement gap

Compared with basic measurement gaps, an Activation/Deactivation (that is, activation/deactivation) mechanism is further introduced. When a pre-configured measurement gap configured is activated, its operation is entirely the same as the basic measurement gap.

The Activation/Deactivation mechanism can be further divided into the following two mechanisms:

### (1) Autonomous activation/deactivation mechanism

The terminal can autonomously change the state of the pre-configured measurement gap from activated state to deactivated state, or vice versa, according to any one or any combination of trigger conditions listed in TS38.133.

### (2) Network-controlled activation/deactivation mechanism

The UE determines a pre-configured measurement gap as Activated or Deactivated based on the network-side-configured RRC parameter preConfGapStatus.

### 3. Simultaneous measurement gap

Compared with basic measurement gaps, Gap combinations with Collision of MG occasions are allowed to be configured for the terminal.

When the terminal does not support per-FR MG configuration, the network can configure at most two per-UE MG patterns for the terminal; when the terminal supports per-FR MG configuration, the network can configure a Combination of MG patterns in Table 9.1.8-1 of TS38.133 for the terminal.

For the determination of collision of MG occasions, refer to the provisions in TS38.133. When it is determined that there is a collision (that is, collision), processing is based on the priority configured for the measurement gap: applying the MG occasion corresponding to a high priority (effective), and dropping the MG occasion corresponding to a low priority (ineffective). It is required that any two MG occasions determined to be in collision have corresponding priorities and the corresponding priorities be different.

### IV. Other (independent of measurement gap) gap mechanisms

In NR, the following gap mechanisms are further introduced.

### 1. NCSG

When NCSG is configured, other measurement gaps are not allowed to be configured. FIG. 2 is a schematic diagram of NCSG parameters. As shown in FIG. 2, visible interruption length (visible interruption length, VIL) 1 is a visible interruption length before measurement length (Measurement length, ML), VIL2 is a visible interruption length after ML. During VIL1 and VIL2, the user terminal does not expect to transmit and receive any data; during ML, whether the terminal needs to transmit and receive data on the corresponding serving carrier depends on the scheduling restriction requirements specified in clauses 9.2.7.3 and 9.3.10.3 of TS38.133; visible interruption repetition period (Visible interruption Repetition Period, VIRP). For the NCSG configuration table, refer to Table 9.1.9.3-1 in TS38.133, which is different from the configuration table of measurement gaps.

### 2. MUSIM (that is, multiple universal subscriber identity module) gap

A MUSIM gap is used for MUSIM operations, for example, for at least one of cell identification and measurement, paging monitoring, SIB acquisition, and on-demand SI request in target cell of target network.

No data transmission and reception restrictions for a terminal in a MUSIM gap are given in TS38.133, and it is currently understood as following the same restrictions as those for measurement gaps. For the MUSIM Gap Pattern Configurations table, refer to Table 9.1.10-1 in TS38.133, which is different from the configuration table of measurement gaps.

### 3. UL gap for Tx power management

A UL gap is used for Tx power management in NR FR2, with restrictions on some uplink transmissions in the following scenarios. When the UL gap overlaps with uplink transmission in an NR serving cell in the case of FR2 single carrier, or in an FR2 intra-band CA scenario or in an FR2 inter-band CA scenario where the UE does not support tx-Support-UL-GapFR2-r17, the user terminal does not need to perform any transmission other than those listed in clause 5.30 of TS 38.321 during the UL gap of the NR serving cell. For the UL Gap Pattern Configurations table, refer to Table 9.1.11-1 in TS38.133, which is different from the Measurement gap configuration table.

The following describes in detail the provisions on scheduling restrictions (that is, Restrictions on scheduling availability) in NR.

Considering terminal-side RRM operations, in addition to the terminal-side data transmission and reception restrictions of the gap mechanisms mentioned above, restrictions on scheduling availability are also introduced in a time period (or a symbol subset therein) when the terminal performs an RRM operation. The cases listed below all focus on the transmission restrictions applied when the terminal is not in a measurement gap (some cases marked as with NCSG are transmission restrictions applied during ML of NCSG for the terminal, in which case the terminal is not allowed to configure other MGs).

The considerations for introducing Restrictions on scheduling availability in a time period when a terminal performs an RRM operation are generally as follows:

### Factor 1: Switching between uplink and downlink transmission directions

Conflict: Only uplink transmission is affected, including the physical uplink control channel (Physical Uplink Control Channel, PUCCH), physical uplink shared channel (Physical Uplink Shared Channel, PUSCH), sounding reference signal (Sounding Reference Signal, SRS), or the like.

Involved cases: The user terminal performs measurements on a TDD band (on FR1).
1: Intra-frequency measurement based on NR SSB, no MG needed (or with NCSG)
   Involved symbols: SSB symbols, RSSI measurement symbols (only for SS-RSRQ measurement) and some preceding/following data symbols within SMTC window duration
   Extension to other serving cells: Note 12; Note 13.
2: Inter-frequency measurement based on NR SSB, no MG needed (or with NCSG)
   Involved symbols: SSB symbols, RSSI measurement symbols (only for SS-RSRQ measurement), and some preceding/following data symbols within SMTC window duration
   Extension to other serving cells: Note 12; Note 13 (only applicable to cases with NCSG).
3: CLI (SRS-RSRP/CLI-RSSI) measurement on FR1/FR2 (always no MG needed)
   Involved symbols: OFDM symbols for CLI measurement and some preceding data symbols
   Extension to other serving cells: Note 12.
4: Intra-frequency measurement based on NR CSI-RS (always no MG needed)
   Involved symbols: configured CSI-RS resource symbols and some preceding/following data symbols

Extension to other serving cells: Note 12.

Note 11: For cases 3 and 4, not limited to FR1; Note 12: Restrictions applicable to other intra-band serving cells (applicable to all above cases). When TDD intra-band carrier aggregation is performed, scheduling restrictions due to a given serving cell should also apply to all other intra-band serving cells in the same band on the symbols that fully or partially overlap with the above restricted symbols. Note 13: Restrictions applicable to other inter-band serving cells when the UE does not support simultaneousRxTxInterBandCA for the corresponding band pair. When TDD inter-band carrier aggregation is performed, scheduling restrictions due to a given serving cell should also apply to another serving cell in a different band on the symbols that fully or partially overlap with the above restricted symbols, if the UE does not have the capability of supporting simultaneousRxTxInterBandCA for this band pair.

Factor 2: Switching between different DL SCSs in FR1

Conflict: Both uplink transmission and downlink reception are affected: the terminal is not expected to transmit PUCCH/PUSCH/SRS, or is not expected to receive physical downlink control channel (Physical Downlink Control Channel, PDCCH)/physical downlink shared channel (Physical Downlink Shared Channel PDSCH)/tracking reference signal/channel state information reference signal for tracking/channel state information reference signal for channel quality. Being not expected to receive tracking reference signal and channel state information reference signal for tracking only take effect for some of the following cases.

Involved cases: For terminals that do not support simultaneousRxDataSSB-DiffNumerology (for intra-frequency measurement (including cases without MG or with NCSG), L1-RSRP measurement (including cases for reporting or for candidate beam detection), L1-SINR measurement, radio link monitoring, and beam failure detection) or simultaneousRxDataSSB-DiffNumerology-Inter-r16 (for inter-frequency measurement) and perform SSB-based operations:

Case I: The terminal performs measurement using different subcarrier spacings on FR1 (for cases not applicable to CSI-RS)
1: Intra-frequency measurement based on NR SSB, no MG needed (or with NCSG)
   Involved symbols: SSB symbols and some preceding/following data symbols within SMTC window duration if deriveSSB_IndexFromCell is enabled; all symbols within SMTC window duration if deriveSSB_IndexFromCell is not enabled.
   Extension to other serving cells: Note 21.
2: Inter-frequency measurement based on NR SSB, no MG needed (or with NCSG)
   Involved symbols: SSB symbols and some preceding/following data symbols within SMTC window duration
   Extension to other serving cells: Note 21.
3: L1-RSRP measurement based on NR SSB, for reporting (or for candidate beam detection) (always no MG needed)
   Involved symbols: symbols corresponding to SSB indexes configured for L1-RSRP measurement
   Extension to other serving cells: Note 21; Note 22.
4: L1-SINR measurement based on NR SSB (always no MG needed)
   Involved symbols: SSB symbols for L1-SINR measurement
   Extension to other serving cells: Note 21; Note 22.

Case II: The terminal performs radio link monitoring using a subcarrier spacing different from PDSCH/PDCCH on FR1
Involved symbols: SSB symbols for radio link monitoring
Extension to other serving cells: Note 21; Note 22.

Case III: The terminal performs beam failure detection using a subcarrier spacing different from PDSCH/PDCCH on FR1
Involved symbols: SSB symbols for beam failure detection
Extension to other serving cells: Note 21; Note 22.

Note 21: Applicable to other intra-band serving cells (applicable to all above cases). When intra-band carrier aggregation is performed, scheduling restrictions due to a given serving cell should also apply to all other intra-band serving cells in the same band on the symbols that fully or partially overlap with the above restricted symbols. Note 22: Not applicable to other inter-band serving cells. When FR1 inter-band carrier aggregation is configured, for FR1 serving cells configured on a band other than the band where the serving cell with scheduling restriction is located, there is no scheduling restriction.

Factor 3: Switching between different analog beams (Beam management) in FR2
Conflict: Both uplink transmission and downlink reception are affected.
Involved cases:

Case I: The user terminal performs measurement on FR2
1: Intra-frequency measurement based on NR SSB, no MG needed (or with NCSG)
   Involved symbols: SSB symbols and some preceding/following data symbols within SMTC window duration if deriveSSB_IndexFromCell is enabled; all symbols within SMTC window duration if deriveSSB_IndexFromCell is not enabled.
   Extension to other serving cells: Note 31; Note 32; Note 33; Note 34.
2: Inter-frequency measurement based on NR SSB, no MG needed (or with NCSG)
   Involved symbols: SSB symbols and some preceding/following data symbols within SMTC window duration
   Extension to other serving cells: Note 31; Note 35 (only applicable to cases with NCSG).
3: L1-RSRP measurement based on NR CSI-RS/SSB, for reporting (or for candidate beam detection) (always no MG needed)
   Involved symbols: symbols corresponding to SSB indexes or periodic/semi-persistent/aperiodic CSI-RS resources configured for L1-RSRP measurement and some preceding/following data symbols (for FR2-2 and 480/960 kHz SCS reference symbols and HST scenarios)
   Extension to other serving cells: Note 31; Note 32; Note 33.
4: L1-SINR measurement based on NR CSI-RS/SSB (always no MG needed)
   Involved symbols: symbols for L1-SINR measurement and some preceding/following data symbols (only applicable to FR2 power class 6 UE configured with highSpeedMeasFlagFR2-r17)
   Extension to other serving cells: Note 31.
5: Intra-frequency measurement based on NR CSI-RS (always no MG needed)
   Involved symbols: configured CSI-RS symbols to be measured, within the configured slot of the corresponding CSI-RS resource.
   Extension to other serving cells: Note 31; Note 32.

Case II: The user terminal performs radio link monitoring on FR2
Involved symbols: RLM-RS symbols to be measured and some preceding/following data symbols (only applicable to FR2-2 and the RLM-RS using a 480/960 kHz SCS)
Extension to other serving cells: Note 31; Note 32; Note 33.

Case III: The user terminal performs beam failure detection on FR2
Involved symbols: candidate beam detection reference symbols to be measured and some preceding/following data symbols (only applicable to FR2-2 and the RLM-RS using a 480/960 kHz SCS)
Extension to other serving cells: Note 31; Note 32; Note 33.

Note 31: Applicable to other intra-band serving cells (applicable to all above cases). When FR2 intra-band carrier aggregation is performed, scheduling restrictions due to a given serving cell should also apply to all other intra-band serving cells in the same band on the symbols that fully or partially overlap with the above restricted symbols. Note 32: Not applicable to other inter-band serving cells. When FR2 inter-band carrier aggregation is performed, since there are scheduling restrictions on FR2 serving cells in different bands, there is no scheduling restriction on FR2 serving cells in a band other than the band where the FR2 serving cell with scheduling restriction is located, provided that the user terminal has the capability to independently perform beam management on this FR2 band pair. Note 33: Not applicable to cases involving different numerologies between SSB and data on FR2 bands, provided that an IBM operation is performed for the corresponding band pair. Additionally, if the user terminal is configured with different numerologies between SSB on one FR2 band and data on another FR2 band, and an IBM operation is performed for this band pair, there is no scheduling restriction. Note 34: Restrictions applicable to other inter-band serving cells when the UE does not support simultaneousRxTxInterBandCA for the corresponding band pair. When FR2 inter-band carrier aggregation is performed, scheduling restrictions due to a given serving cell should also apply to another serving cell in a different FR2 band on the symbols that fully or partially overlap with the above restricted symbols, if the UE does not have the capability of supporting simultaneousRxTxInterBandCA for this FR2 band pair. Note 35: Applicability of restrictions for all combinations of IBM and simultaneous Rx/Tx capability in inter-band cases.

Case A: The UE does not support IBM between a target measurement band and a serving cell band, nor supports simultaneousRxTxInterBandCA.

Case B: The UE does not support IBM between a target measurement band and a serving cell band, but supports simultaneousRxTxInterBandCA.

Case C: The UE supports IBM between a target measurement band and a serving cell band, but does not support simultaneousRxTxInterBandCA.

Case D: UE supports IBM between a target measurement band and a serving cell band, and also supports simultaneousRxTxInterBandCA.

No scheduling restriction is applied to the serving cell.

Factor 4: Different UE capabilities for downlink FDMed measurement and reception

Conflict: Only downlink reception is received.

### Involved cases:

Case I: The user terminal performs FDMed CLI measurement and downlink reception

### 1: CLI (SRS-RSRP/CLI-RSSI) measurement on FR1/FR2 (always no MG needed)

Involved symbols: for SRS-RSRP measurement, OFDM symbols for SRS-RSRP measurement and some preceding data symbols; for CLI-RSSI measurement, OFDM symbols for CLI-RSSI measurement and some preceding data symbols

Extension to other serving cells: Note 41. Note 41: Applicable to other intra-band serving cells (applicable to all above cases). When TDD intra-band carrier aggregation is configured, scheduling restrictions on the serving cell performing CLI measurement should also apply to all other serving cells in a same band on the symbols that fully or partially overlap with restricted symbols.

From the above description, it can be known that in NR, to support RRM measurements, positioning, CGI reporting, MUSIM operation, Tx power management, and the like, multiple gap mechanisms are introduced. Additionally, to ensure the performance of RRM measurements, RLM, BFD, and the like, rules such as scheduling availability/restrictions are introduced. These gap mechanisms and scheduling availability/restrictions rules are collectively referred to as scheduling restriction.

When the network is serving XR services, XR service transmission is interrupted in regions where these scheduling restrictions take effect, affecting user experience of XR services. Therefore, when the network is operating some services that require guaranteed user experience, corresponding mechanisms are needed to guarantee service transmission.

To solve the above problems, in the transmission restriction adjustment method according to the embodiments of this application, a terminal can receive first indication information sent by a network-side device, where the first indication information is used to indicate whether to deactivate a first time region, and the first time region includes at least one first time unit in which transmission restriction is applied to the terminal; and in a case that the first indication information indicates to deactivate the first time region, the terminal deactivates at least part of the first time units in the first time region based on a target time, where the target time is determined based on an information reception time of the first indication information. Through this solution, since the terminal can deactivate, based on the indication and information reception time of the first indication information, at least part of the first time units in which transmission restriction is applied to the terminal in the first time region, transmission restriction on the terminal can be relaxed within the at least part of the first time units. This can prevent interruption of transmission of XR services transmitted within the at least part of the first time units, thereby ensuring normal operation of XR services.

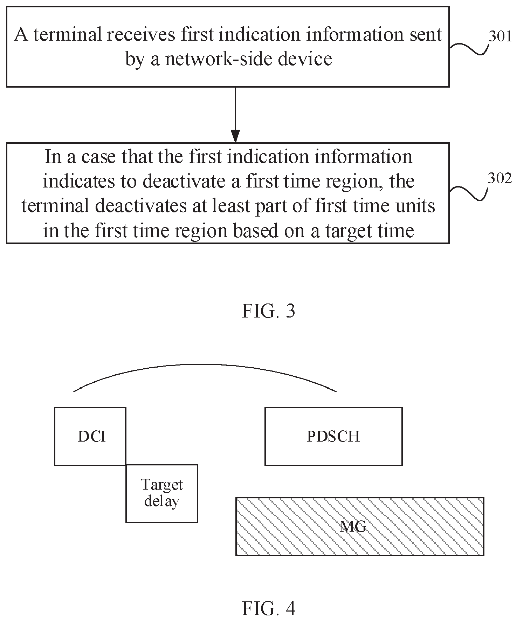

An embodiment of this application provides a transmission restriction adjustment method. FIG. 3 is a flowchart of a transmission restriction adjustment method according to an embodiment of this application. As shown in FIG. 3, the transmission restriction adjustment method according to the embodiment of this application may include the following steps 301 and 302.

Step 301: A terminal receives first indication information sent by a network-side device.

The first indication information is used to indicate whether to deactivate a first time region, and the first time region includes at least one first time unit in which transmission restriction is applied to the terminal.

Optionally, in the embodiments of this application, the first time region may be a scheduling restriction time region, a transmission restriction time region, a measurement gap, or the like.

Optionally, in the embodiments of this application, the at least one first time unit may be contiguous or non-contiguous.

Optionally, in the embodiments of this application, the first time unit may be a slot, a symbol, a subframe, or the like.

Optionally, in the embodiments of this application, deactivating the first time region means relaxing/canceling transmission restriction on the terminal in the first time region.

Optionally, in the embodiments of this application, the deactivating may also be called skipping, releasing, disabling, or the like.

Optionally, in the embodiments of this application, the transmission restriction may also be called scheduling restriction, transmission restricted, scheduling restricted, or the like.

Optionally, in the embodiments of this application, the transmission restriction includes at least one of uplink transmission restriction and downlink transmission restriction.

Optionally, in the embodiments of this application, the uplink transmission restriction includes: PUCCH transmission restriction (that is, not sending PUCCH), PUSCH transmission restriction (that is, not sending PUSCH), SRS transmission restriction (that is, not sending SRS), or the like.

Optionally, in the embodiments of this application, the downlink transmission restriction includes: PDCCH transmission restriction (that is, not sending PDCCH), PDSCH transmission restriction (that is, not sending PDSCH), tracking reference signal transmission restriction (that is, not sending tracking reference signals), transmission restriction on channel state information reference signal for tracking (that is, not sending channel state information reference signals for tracking), transmission restriction on channel state information reference signal for channel quality (that is, not sending channel state information reference signals for channel quality), or the like.

Optionally, in the embodiments of this application, the first indication information may satisfy at least one of the following 1.1 to 1.5:
1.1. carrying an explicit indication field, where the indication field is used to indicate whether to deactivate the first time region;
1.2. including second indication information, where the second indication information is used to indicate a time domain transmission resource to the terminal;
1.3. including third indication information, where the third indication information is used to indicate to the terminal at least one hybrid automatic repeat request (Hybrid Automatic Repeat Request, HARQ) process corresponding to transmission;
1.4. carried by first downlink control information (Downlink Control Information, DCI) that schedules at least one target channel transmission; and
1.5. carried by second DCI that does not schedule target channel transmission; where
the target channel transmission is any one of the following: PDSCH transmission, and PUSCH transmission.

Optionally, in the embodiments of this application, the network-side device may pre-configure, through other indication information (for example, RRC), a behavior to be performed when the time domain transmission resource indicated by the second indication information overlaps with the first time region (for example, deactivating the overlapping time region).

Optionally, in the embodiments of this application, the network-side device may pre-configure, through other indication information (for example, RRC), a behavior of the HARQ process in the first time region (for example, transmitting a given HARQ process within the first time region).

Optionally, in the embodiments of this application, the second DCI may be group-common DCI (that is, group-common DCI), non-scheduling DCI (non-scheduling DCI), or the like, and the second DCI may be used to indicate whether to deactivate the first time region.

In the embodiments of this application, since the first indication information can satisfy at least one of the above 1.1 to 1.5, the terminal can deactivate at least part of the first time units in the first time region through indications of different first indication information, thereby improving flexibility for the terminal to deactivate the at least part of the first time units.

Optionally, in the embodiments of this application, the target channel transmission may satisfy at least one of the following 2.1 to 2.3:
2.1. overlapping in time domain with a time region that is after a reception time of the first DCI in the first time region;
2.2. associated with a given HARQ process; and
2.3. associated with a given transmission priority.

In the embodiments of this application, since the target channel transmission can satisfy at least one of the above 2.1 to 2.3, forms of the first indication information can be further enriched, thereby further improving flexibility for the terminal to deactivate the at least part of the first time units.

Optionally, in the embodiments of this application, the first DCI may further carry fourth indication information, where the fourth indication information is used to indicate activation or deactivation of the first time region.

In the embodiments of this application, since the first DCI may further carry the fourth indication information used to indicate activation or deactivation of the first time region, the terminal can quickly determine, through the indication of the fourth indication information, whether to deactivate the first time region.

Optionally, in the embodiments of this application, the first time region may be: a transmission restriction time region that is after the information reception time of the first indication information and closest to the information reception time; or the first time region overlaps with a time domain transmission resource indicated by the first indication information.

For example, if the first indication information is DL or UL scheduling DCI, and the DCI schedules a PDSCH or a PUSCH, the PDSCH or the PUSCH overlaps in time domain with a scheduling restriction region, and the scheduling restriction region is the first time region indicated by the first indication information.

In the embodiments of this application, since the first time region may be the closest transmission restriction time region after the information reception time of the first indication information, or may overlap with the time domain transmission resource indicated by the first indication information, flexibility of the time region that can be deactivated by the terminal can be improved.

Optionally, in the embodiments of this application, a frequency range corresponding to the first time region may be at least one of the following 3.1 to 3.3:
3.1. a frequency range on one band;
3.2. a frequency range on one serving cell; and
3.3. a frequency range on multiple serving cells.

Optionally, in the embodiments of this application, the one serving cell may be a serving cell where the first indication information is sent, may be a serving cell where a given transmission (for example, PDSCH transmission, PUSCH transmission, or PUCCH transmission) is performed, or the like.

Optionally, in the embodiments of this application, the one serving cell may be a PCell (that is, PCell), an SCell (that is, SCell), or the like.

Optionally, in the embodiments of this application, the multiple serving cells include at least one of a current scheduling cell (that is, scheduling cell) and a scheduled cell (that is, scheduled cell), or include all cells in a current cell group.

In the embodiments of this application, since the frequency range corresponding to the first time region may be at least one of the above 3.1 to 3.3, whether to deactivate time regions in different frequency ranges can be indicated through the first indication information, thereby further improving flexibility of the time region that can be deactivated by the terminal.

Optionally, in the embodiments of this application, the first time region may be contiguous or non-contiguous.

Optionally, in the embodiments of this application, when the first time region is continuous, the first time region may be a continuous time period, a continuous time window, a continuous time interval, or the like, in which transmission restriction is applied to the terminal.

Optionally, in the embodiments of this application, the first time region may be at symbol level, at slot level, at subframe level, or the like.

Optionally, in the embodiments of this application, the first time region may be within an SSB measurement timing configuration (SSB Measurement Timing Configuration, SMTC) time window, or within a time window other than the SMTC time window.

Optionally, in the embodiments of this application, when the first time region is discontinuous, the first time region may be multiple symbols, slots, subframes, or the like within one time window, or may be symbols, slots, subframes, or the like in which reference signals are transmitted within a period of time.

Optionally, in the embodiments of this application, the reference signal may be an SSB, a CSI-RS, or the like.

In the embodiments of this application, since the first time region may be contiguous or non-contiguous, flexibility of the time region that can be deactivated by the terminal can be further improved.

Step 302: In a case that the first indication information indicates to deactivate the first time region, the terminal deactivates at least part of the first time units in the first time region based on a target time.

The target time is determined based on an information reception time of the first indication information.

Optionally, in the embodiments of this application, the information reception time may be specifically: a reception time of signaling carrying the first indication information.

Optionally, in the embodiments of this application, the reception time of the signaling carrying the first indication information may include: a start time (that is, a slot, a symbol, a subframe, or the like) or an end time (that is, a slot, a symbol, a subframe, or the like) of the signaling carrying the first indication information.

Optionally, in the embodiments of this application, the target time may be the earliest time at which the terminal can deactivate the transmission restriction time region. In other words, if the terminal can deactivate the transmission restriction time region, the information reception time of the first indication information cannot be later than the target time.

Optionally, in the embodiments of this application, the target time may be one slot, one symbol, one subframe, or the like.

Optionally, in the embodiments of this application, for a time unit in the first time region other than the at least part of the first time units, the terminal does not perform a deactivation operation, that is, it follows the rules applicable within the transmission restriction time region.

Optionally, in the embodiments of this application, the target time is before the start time of the first time region; and a start time of the at least part of the first time units may include any one of the following 4.1 to 4.4:
4.1. the start time of the first time region;
4.2. a start time of a second time region;
4.3. a start time of N time units, where the N time units are before the second time region and adjacent to the second time region, and N is a positive integer; and
4.4. a start time selected by the terminal; where
the second time region is: an overlapping time region between the first time region and a time domain transmission resource corresponding to the terminal.

Optionally, in the embodiments of this application, the second time region may be further: a time region corresponding to a time domain resource indicated by the first indication information.

Optionally, in the embodiments of this application, the start time selected by the terminal may be a start time selected by the terminal itself; or may be a start time of the N time units selected by the terminal, where a value of N is determined by the terminal itself, is not specified by a protocol, or the like.

Optionally, in the embodiments of this application, the value of the N may be further configured by the network-side device or predefined. For example, the value of N is determined by the network-side device based on a time required for RF adjustment of the terminal.

Optionally, in the embodiments of this application, the time domain transmission resource corresponding to the terminal may be indicated by the first indication information, or may be configured by the network-side device.

Optionally, in the embodiments of this application, the time domain transmission resource corresponding to the terminal may be any one of the following: PDSCH, PUSCH, PUCCH, PDSCH repetition, PUSCH repetition, PUCCH repetition, and the like.

In the embodiments of this application, since when the target time is before the start time of the first time region, the start time of the at least part of the first time units may include any one of the above 4.1 to 4.4, the terminal can start deactivating the at least part of the first time units from different start times, thereby improving flexibility for terminal deactivation.

Optionally, in the embodiments of this application, the target time is after a start time of the first time region; and the start time of the at least part of the first time units may include any one of the following 5.1 to 5.4:
5.1. the target time;
5.2. a start time of a second time region that is after the target time;
5.3. a start time of M time units that are after the target time, where the M time units are before the second time region and adjacent to the second time region, and M is a positive integer; and
5.4. a start time selected by the terminal after the target time; where
the second time region is: an overlapping time region between the first time region and a time domain transmission resource corresponding to the terminal.

In the embodiments of this application, since when the target time is after the start time of the first time region, the start time of the at least part of the first time units may include any one of the above 5.1 to 5.4, the terminal can start deactivating the at least part of the first time units from different start times, thereby further improving flexibility for terminal deactivation.

Optionally, in the embodiments of this application, an end time of the at least part of the first time units may include any one of the following 6.1 to 6.4:
6.1. an end time of the first time region;
6.2. an end time of the second time region;
6.3. an end time of P time units, where the P time units are after the second time region and adjacent to the second time region, and P is a positive integer; and
6.4. an end time selected by the terminal based on a target proportion, where the target proportion is a proportion of a length corresponding to all first time units allowed to be deactivated to a time length corresponding to the first time region; where
the second time region is: an overlapping time region between the first time region and the time domain transmission resource corresponding to the terminal.

Optionally, in the embodiments of this application, for the remaining time region after the end time of the at least part of the first time units in the first time region, the terminal may continue to perform transmission restriction rules or operations in the remaining time region.

Optionally, in the embodiments of this application, the time domain transmission resource may be indicated by the first indication information, or may be configured by the network-side device.

Optionally, in the embodiments of this application, the target proportion may be configured by the network-side device or determined by the terminal itself.

Optionally, in the embodiments of this application, when the target proportion is determined by the terminal itself, the target proportion may be one proportion selected by the terminal from multiple proportions configured by the network-side device.

Optionally, in the embodiments of this application, when the target proportion is determined by the terminal itself, after determining the target proportion, the terminal may report the target proportion to the network-side device, or a to-be-deactivated first time unit determined based on the target proportion, or a start time of a to-be-deactivated first time unit determined based on the target proportion.

For example, taking the target proportion being configured by the network-side device as an example, assuming that a time length of the first time region is L and a proportion of the first time region allowed to be deactivated (that is, the target proportion) is a (0<a<1), the terminal may deactivate first time units with a time length not greater than a*L within the first time region, starting from the start time of the first time region.

For another example, taking the target proportion being determined by the terminal itself as an example, assuming that a time length of the first time region is L and a proportion of the first time region allowed to be deactivated (that is, the target proportion) is a (0<a<1), the terminal may deactivate first time units with a time length not greater than a*L within the first time region, starting from the target time.

In the embodiments of this application, since the end time of the at least part of the first time units may include any one of the above 6.1 to 6.4, the terminal can deactivate the at least part of the first time units with different time lengths, thereby further improving flexibility for terminal deactivation.

The following illustrates the transmission restriction adjustment method according to the embodiments of this application with reference to the accompanying drawings.

For example, assuming that MG is the first time region and DCI for scheduling PDSCH carries the first indication information, then:

As shown in FIG. 4, after a target delay since the reception of the DCI by the terminal, the target time determined based on the information reception time of the DCI and the target delay is before a start time of the MG. Normally, if the DCI or network configuration does not indicate that the MG can be deactivated, the terminal needs to perform measurement on the MG, that is, it does not receive a PDSCH scheduled by the DCI. However, if the DCI carries indication information for deactivating the MG, or the network configures a behavior allowing deactivation of the MG and the PDSCH scheduled by the DCI overlaps with the MG, starting from the MG start time, that is, after the target delay since the information reception time of the DCI, the terminal deactivates the entire MG, that is, deactivates all of the first time region.

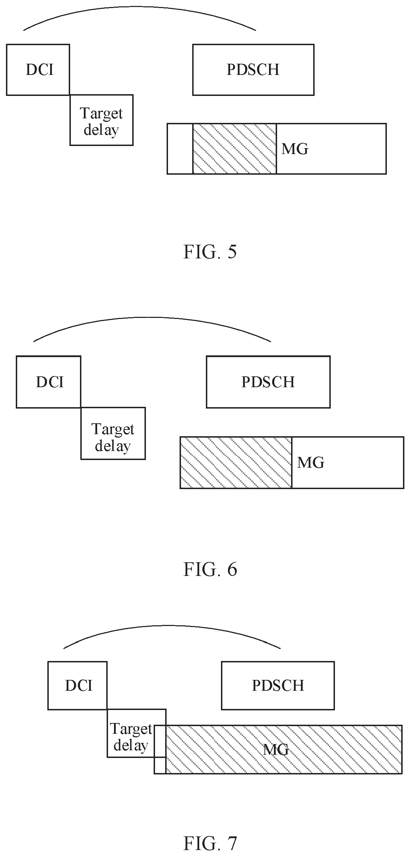

As shown in FIG. 5, after the target delay since the DCI reception time, the terminal deactivates part of the region of the MG starting from a position where the MG overlaps with the PDSCH, that is, deactivates the region of the MG overlapping with the PDSCH.

As shown in FIG. 6, assuming that the network sets the proportion of the MG region allowed to be skipped to X% (that is, the target proportion), the terminal, starting from a start position of the MG, that is, after the target delay since the DCI reception time, deactivates the MG region of the X% proportion.

As shown in FIG. 7, after the target delay since reception of the DCI by the UE, if the target time determined based on the information reception time of the DCI and the target delay is after the start time of the MG, the terminal, after the target delay since the DCI reception time, deactivates the remaining region of the MG.

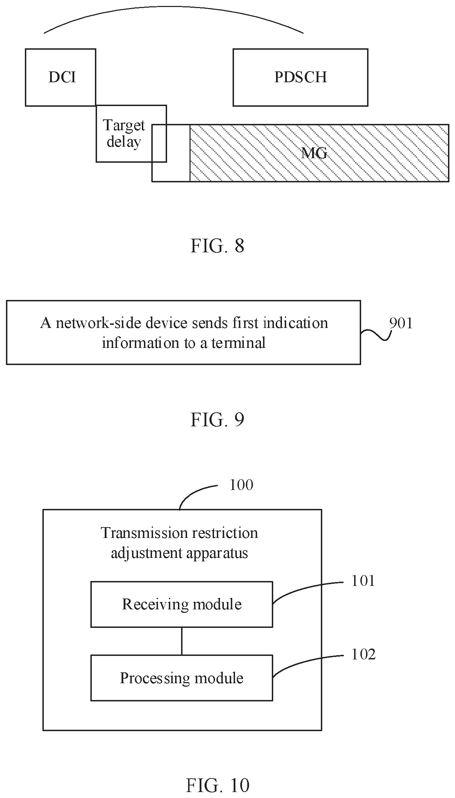

As shown in FIG. 8, after the target delay since reception of the DCI by the UE, if the target time determined based on the information reception time of the DCI and the target delay is after the start time of the MG, the terminal, after the target delay since the DCI reception time, deactivates the remaining region of the MG, starting from a position where the MG overlaps with the PDSCH.

It should be noted that in the above examples, only PDSCH is used for illustration, but in actual implementation, the PDSCH can be replaced by PUSCH or PUCCH, that is, PUSCH or PUCCH scheduled by DCI, which is not limited in the embodiments of this application.

In the transmission restriction adjustment method according to the embodiments of this application, since the terminal can deactivate, based on the indication and information reception time of the first indication information, at least part of the first time units in which transmission restriction is applied to the terminal in the first time region, transmission restriction on the terminal can be relaxed within the at least part of the first time units. This can prevent the interruption of transmission of low-latency services transmitted within the at least part of the first time units, thereby ensuring normal operation of the low-latency services.

Optionally, in the embodiments of this application, after the step 302, the transmission restriction adjustment method according to the embodiments of this application may further include the following step 303.

Step 303: The terminal performs a first operation within the at least part of the first time units.

The first operation includes at least one of the following:
receiving a PDCCH scrambled with the terminal-specific radio network temporary identity (Radio Network Temporary Identity, RNTI);
receiving a dynamic grant PDSCH (Dynamic Grant PDSCH, DG PDSCH);
sending a DG PUSCH;
performing a given semi-persistent scheduling (Semi-Persistent Scheduling, SPS) transmission; and
performing a given configured grant (Configured Grant, CG) transmission.

In the embodiments of this application, since the terminal can perform the first operation within the at least part of the first time units after deactivating the at least part of the first time units, necessary uplink and downlink transmissions within the deactivated time units can be guaranteed.

Optionally, in the embodiments of this application, the step 303 may be specifically implemented through the following step 303a.

Step 303a: In a case that a target condition is satisfied, the terminal performs the first operation within the at least part of the first time units.

The target condition includes at least one of the following:
a measurement result of a target-type measurement signal by the terminal meets a preset threshold;
the terminal transmits a specific downlink (DownLink, DL);
the terminal transmits a specific uplink (UpLink, UL);
the terminal transmits a specific HARQ process;
to-be-transmitted data corresponding to an uplink target logical channel exists;
to-be-transmitted data corresponding to an uplink target logical channel group exists;
the terminal is in discontinuous reception (Discontinuous Reception, DRX) on duration; and
the terminal starts a target timer.

Optionally, in the embodiments of this application, the target type, the measurement signal, and the preset threshold may all be specified or configured by the network-side device.

Optionally, in the embodiments of this application, the specific DL may be a high-priority PDSCH, and the specific UL may be a high-priority PUSCH.

Optionally, in the embodiments of this application, the target timer may be a DRX onduration timer, a DRX inactivity timer, a retransmission timer, or the like.

In the embodiments of this application, since in a case that the target condition is satisfied, the terminal can perform the first operation within the at least part of the first time units, flexibility in triggering execution of the first operation can be improved.

Optionally, in the embodiments of this application, the following behavior may also be performed within the at least part of the first time units: for all or part of the first time units that the terminal has determined to deactivate, changing, by the network-side device to activate the all or part of the first time units; or for all or part of the first time units that have been determined to deactivate, not expecting, by the terminal, that the network-side device changes to activate the all or part of the first time units, meaning that the network-side device needs to ensure consistency of the first indication information sent to the terminal.

Optionally, in the embodiments of this application, before the step 302, the transmission restriction adjustment method according to the embodiments of this application may further include the following step 304.

Step 304: The terminal determines the target time based on a target delay and the information reception time of the first indication information.

The target delay is an effective delay for deactivating the first time region.

Optionally, in the embodiments of this application, the target delay may also be called a target time offset; specifically, the target delay may be any one of the following:
an offset value relative to the information reception time of the first indication information;
a time interval between the information reception time of the first indication information and the deactivated first time region; and
a time range that is after the information reception time of the first indication information and before the deactivated at least part of the first time units (that is, an offset value forward relative to a start time of the deactivated time region).

Optionally, in the embodiments of this application, when the target delay is a time interval between the information reception time of the first indication information and the deactivated first time region, the target delay may be specifically: a time interval between the information reception time of the first indication information and the deactivated at least part of the first time units.

Optionally, in the embodiments of this application, when the target delay is a time interval between the information reception time of the first indication information and the deactivated first time region, the target delay may be a minimum time interval.

Optionally, in the embodiments of this application, a unit of the target delay may be slot, symbol, subframe, or the like, or may be a unit of time (that is, s, ms, µs, or the like).

In the embodiments of this application, since before deactivating the at least part of the first time units based on the target time, the terminal can first determine the target time based on the target delay and the information reception time of the first indication information, a preparation time can be reserved for the deactivation operation of the terminal, thereby improving accuracy of the deactivation operation.

Optionally, in the embodiments of this application, the target delay may be determined by at least one of the following 7.1 to 7.4:
7.1. a subcarrier spacing (Sub-Carrier Spacing, SCS);
7.2. a type of a measurement gap (Measurement Gap, MG);
7.3. a configuration of the network-side device; and
7.4. a capability of the terminal.

Optionally, in the embodiments of this application, when the target delay is determined by the configuration of the network-side device, the target delay may be configured by RRC.

Optionally, in the embodiments of this application, the SCS may be an SCS corresponding to receiving of DCI or PDCCH, or may be an SCS corresponding to receiving of PDSCH, or may be an SCS corresponding to sending of PUSCH or PUCCH.

Optionally, in the embodiments of this application, a correspondence between the SCS and the target delay may be shown in Table 1 below.

**Table 1**

| SCS | Target delay (unit: ms) |
|---|---|
| 15 kHz | X1 |
| 30 kHz | X2 |
| 60 kHz | X3 |
| 120 kHz | X4 |
| ... | ... |

In the embodiments of this application, since the target delay may be determined by at least one of the above 7.1 to 7.4, flexibility in determining the target delay can be improved.

An embodiment of this application provides another transmission restriction adjustment method. FIG. 9 is a flowchart of a transmission restriction adjustment method according to an embodiment of this application. As shown in FIG. 9, the transmission restriction adjustment method according to the embodiment of this application may include the following step 901.

Step 901: A network-side device sends first indication information to a terminal.

The first indication information is used to indicate whether to deactivate a first time region, and the first time region includes at least one first time unit in which transmission restriction is applied to the terminal.

Optionally, in the embodiments of this application, the first indication information may satisfy at least one of the following:
carrying an explicit indication field, where the indication field is used to indicate whether to deactivate the first time region;
including second indication information, where the second indication information is used to indicate a time domain transmission resource to the terminal;
including third indication information, where the third indication information is used to indicate to the terminal at least one HARQ process corresponding to transmission;
carried by first DCI that schedules at least one target channel transmission; and
carried by second DCI that does not schedule target channel transmission; where
the target channel transmission is any one of the following: PDSCH transmission, and PUSCH transmission.

Optionally, in the embodiments of this application, the target channel transmission may satisfy at least one of the following:
overlapping in time domain with a time region that is after a reception time of the first DCI in the first time region;
associated with a given HARQ process; and
associated with a given transmission priority.

Optionally, in the embodiments of this application, the first DCI may further carry fourth indication information, where the fourth indication information is used to indicate activation or deactivation of the first time region.

Optionally, in the embodiments of this application, the first time region may be: a transmission restriction time region that is after an information reception time of the first indication information and closest to the information reception time; or the first time region overlaps with a time domain transmission resource indicated by the first indication information.

Optionally, in the embodiments of this application, a frequency range corresponding to the first time region may be at least one of the following:
a frequency range on one band;
a frequency range on one serving cell; and
a frequency range on multiple serving cells.

Optionally, in the embodiments of this application, the first time region may be contiguous or non-contiguous.

In the transmission restriction adjustment method according to the embodiments of this application, since the network-side device can send to the terminal first indication information used to indicate whether to deactivate a first time region, and the first time region includes at least one first time unit in which transmission restriction is applied to the terminal, the terminal can deactivate first time units in the first time region based on the first indication information, thereby relaxing transmission restriction on the terminal within the deactivated first time units. This can prevent the interruption of transmission of low-latency services, thereby ensuring normal operation of the low-latency services.

Optionally, in the embodiments of this application, after the step 901, the transmission restriction adjustment method according to the embodiment of this application may further include the following step 902.

Step 902: The network-side device performs a second operation within a first time unit deactivated by the terminal.

The second operation includes at least one of the following:
sending a PDCCH scrambled with the terminal-specific RNTI to the terminal;
sending a DG PDSCH to the terminal;
receiving a DG PUSCH sent by the terminal;
performing a given SPS transmission; and
performing a given CG transmission.

For other specific descriptions in the embodiments of this application and technical effects achievable by various technical features, reference may be specifically made to related descriptions in the foregoing terminal-side method embodiments. To avoid repetition, details are not described herein again.

The transmission restriction adjustment method according to the embodiments of this application may be executed by a transmission restriction adjustment apparatus. In the embodiments of this application, the transmission restriction adjustment apparatus executing the transmission restriction adjustment method is taken as an example to illustrate a transmission restriction adjustment apparatus according to an embodiment of this application.

With reference to FIG. 10, an embodiment of this application provides a transmission restriction adjustment apparatus 100, where the transmission restriction adjustment apparatus 100 may include a receiving module 101 and a processing module 102.

The receiving module 101 may be configured to receive first indication information sent by a network-side device, where the first indication information is used to indicate whether to deactivate a first time region, and the first time region includes at least one first time unit in which transmission restriction is applied to a terminal. The processing module 102 may be configured to, in a case that the first indication information indicates to deactivate the first time region, deactivate at least part of the first time units in the first time region based on a target time, where the target time is determined based on an information reception time of the first indication information.

In one possible implementation, the target time is before a start time of the first time region; and a start time of the at least part of the first time units may include any one of the following: the start time of the first time region; a start time of a second time region; a start time of N time units, where the N time units are before the second time region and adjacent to the second time region, and N is a positive integer; and a start time selected by the terminal. The second time region is: an overlapping time region between the first time region and a time domain transmission resource corresponding to the terminal.

In one possible implementation, the target time is after a start time of the first time region; and a start time of the at least part of the first time units may include any one of the following: the target time; a start time of a second time region that is after the target time; a start time of M time units that are after the target time, where the M time units are before the second time region and adjacent to the second time region, and M is a positive integer; and a start time selected by the terminal after the target time. The second time region is: an overlapping time region between the first time region and a time domain transmission resource corresponding to the terminal.

In one possible implementation, an end time of the at least part of the first time units may include any one of the following: an end time of the first time region; an end time of the second time region; an end time of P time units, where the P time units are after the second time region and adjacent to the second time region, and P is a positive integer; and an end time selected by the terminal based on a target proportion, where the target proportion is a proportion of a length corresponding to all first time units allowed to be deactivated to a time length corresponding to the first time region. The second time region is: an overlapping time region between the first time region and the time domain transmission resource corresponding to the terminal.

In one possible implementation, the first indication information may satisfy at least one of the following: carrying an explicit indication field, where the indication field is used to indicate whether to deactivate the first time region; including second indication information, where the second indication information is used to indicate a time domain transmission resource to the terminal; including third indication information, where the third indication information is used to indicate to the terminal at least one HARQ process corresponding to transmission; carried by first DCI that schedules at least one target channel transmission; and carried by second DCI that does not schedule target channel transmission. The target channel transmission is any one of the following: PDSCH transmission, and PUSCH transmission.

In one possible implementation, the first DCI may further carry fourth indication information, where the fourth indication information is used to indicate activation or deactivation of the first time region.

In one possible implementation, the target channel transmission may satisfy at least one of the following: overlapping in time domain with a time region that is after the reception time of the first DCI in the first time region; associated with a given HARQ process; and associated with a given transmission priority.

In one possible implementation, the first time region may be: a transmission restriction time region that is after an information reception time of the first indication information and closest to the information reception time; or the first time region overlaps with a time domain transmission resource indicated by the first indication information.

In one possible implementation, a frequency range corresponding to the first time region may be at least one of the following: a frequency range on one band; a frequency range on one serving cell; and a frequency range on multiple serving cells.

In one possible implementation, the first time region may be contiguous or non-contiguous.

In one possible implementation, the processing module 102 may be further configured to, after deactivating at least part of the first time units in the first time region based on the target time, perform a first operation within the at least part of the first time units. The first operation includes at least one of the following: receiving a PDCCH scrambled with the terminal-specific RNTI; receiving a DG PDSCH; sending a DG PUSCH; performing a given SPS transmission; and performing a given CG transmission.

In one possible implementation, the processing module 102 may be specifically configured to, in a case that a target condition is satisfied, perform the first operation within the at least part of the first time units. The target condition includes at least one of the following: a measurement result of a target-type measurement signal by the terminal meets a preset threshold; the terminal transmits a specific DL; the terminal transmits a specific UL; the terminal transmits a specific HARQ process; to-be-transmitted data corresponding to an uplink target logical channel exists; to-be-transmitted data corresponding to an uplink target logical channel group exists; the terminal is in DRX on duration; and the terminal starts a target timer.

In one possible implementation, the processing module 102 may be further configured to, before deactivating at least part of the first time units in the first time region based on the target time, determine the target time based on a target delay and the information reception time of the first indication information; where the target delay is an effective delay for deactivating the first time region.

In one possible implementation, the target delay may be determined by at least one of the following: an SCS; a type of an MG; a configuration of the network-side device; and a capability of the terminal.

In the transmission restriction adjustment apparatus according to the embodiments of this application, since the transmission restriction adjustment apparatus can deactivate at least part of the first time units in which transmission restriction is applied to the terminal in the first time region based on the indication and information reception time of the first indication information, transmission restriction on the terminal can be relaxed within the at least part of the first time units, thereby preventing the interruption of transmission of low-latency services transmitted within the at least part of the first time units, thereby ensuring normal operation of the low-latency services.

The transmission restriction adjustment apparatus in the embodiments of this application may be an electronic device, for example, an electronic device having an operating system, or may be a component in an electronic device, such as an integrated circuit or a chip. The electronic device may be a terminal. For example, the terminal may include but is not limited to the types of the terminal 11 listed above, which is not specifically limited in the embodiments of this application.

The transmission restriction adjustment apparatus according to the embodiments of this application can implement various processes implemented by the terminal-side method embodiments, with the same technical effects achieved. To avoid repetition, details are not described herein again.

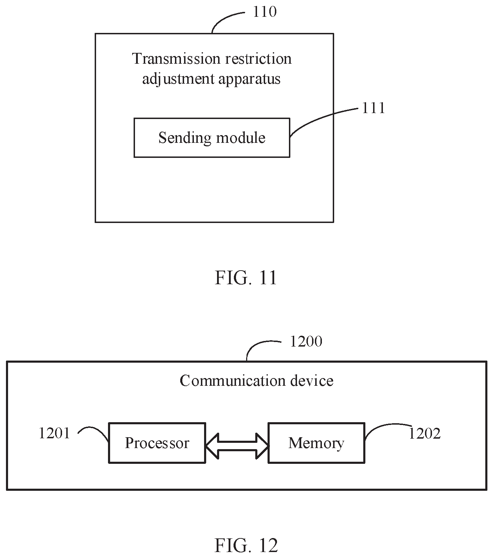

With reference to FIG. 11, an embodiment of this application provides another transmission restriction adjustment apparatus 110, where the transmission restriction adjustment apparatus 110 may include a sending module 111. The sending module 111 may be configured to send first indication information to a terminal; where the first indication information is used to indicate whether to deactivate a first time region, and the first time region includes at least one first time unit in which transmission restriction is applied to the terminal.

In one possible implementation, the first indication information may satisfy at least one of the following: carrying an explicit indication field, where the indication field is used to indicate whether to deactivate the first time region; including second indication information, where the second indication information is used to indicate a time domain transmission resource to the terminal; including third indication information, where the third indication information is used to indicate to the terminal at least one HARQ process corresponding to transmission; carried by first DCI that schedules at least one target channel transmission; and carried by second DCI that does not schedule target channel transmission. The target channel transmission is any one of the following: PDSCH transmission, and PUSCH transmission.

In one possible implementation, the first DCI may further carry fourth indication information, where the fourth indication information is used to indicate activation or deactivation of the first time region.

In one possible implementation, the target channel transmission may satisfy at least one of the following: overlapping in time domain with a time region that is after a reception time of the first DCI in the first time region; associated with a given HARQ process; and associated with a given transmission priority.

In one possible implementation, the first time region may be: a transmission restriction time region that is after the information reception time of the first indication information and closest to the information reception time; or the first time region overlaps with a time domain transmission resource indicated by the first indication information.

In one possible implementation, a frequency range corresponding to the first time region may be at least one of the following: a frequency range on one band; a frequency range on one serving cell; and a frequency range on multiple serving cells.

In one possible implementation, the first time region may be contiguous or non-contiguous.

In one possible implementation, the transmission restriction adjustment apparatus 110 may further include a processing module. The processing module may be configured to, after the sending module 111 sends the first indication information to the terminal, perform a second operation within the first time units deactivated by the terminal. The second operation includes at least one of the following: sending a PDCCH scrambled with the terminal-specific RNTI to the terminal; sending a DG PDSCH to the terminal; receiving a DG PUSCH sent by the terminal; performing a given SPS transmission; and performing a given CG transmission.

In the transmission restriction adjustment apparatus according to the embodiments of this application, since the transmission restriction adjustment apparatus can send to the terminal first indication information used to indicate whether to deactivate a first time region, and the first time region includes at least one first time unit in which transmission restriction is applied to the terminal, the terminal can deactivate first time units in the first time region based on the first indication information, thereby relaxing transmission restriction on the terminal within the deactivated first time units. This can prevent the interruption of transmission of low-latency services, thereby ensuring normal operation of the low-latency services.

The transmission restriction adjustment apparatus in the embodiments of this application may be an electronic device, for example, an electronic device having an operating system, or may be a component in an electronic device, such as an integrated circuit or a chip. The electronic device may be another device different from a terminal. For example, the other device may be a server, a network attached storage (Network Attached Storage, NAS), or the like, which is not specifically limited in the embodiments of this application.

The transmission restriction adjustment apparatus according to the embodiments of this application can implement various processes implemented by the network-side device method embodiments, with the same technical effects achieved. To avoid repetition, details are not described herein again.

As shown in FIG. 12, an embodiment of this application further provides a communication device 1200 including a processor 1201 and a memory 1202, where the memory 1202 stores a program or instructions capable of running on the processor 1201. For example, in a case that the communication device 1200 is a terminal, the program or instructions, when executed by the processor 1201, implement the steps of the terminal-side method embodiments, with the same technical effects achieved. In a case that the communication device 1200 is a network-side device, the program or instructions, when executed by the processor 1201, implement the steps of the network-side device method embodiments, with the same technical effects achieved. To avoid repetition, details are not described herein again.

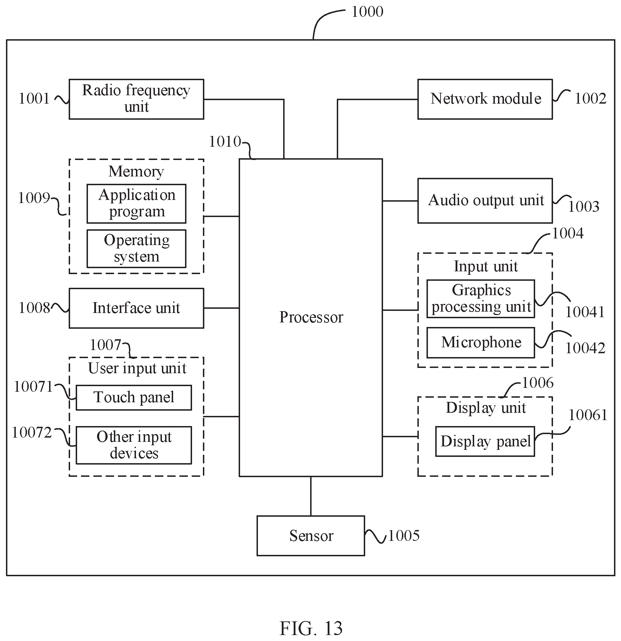

An embodiment of this application further provides a terminal including a processor and a communication interface, where the communication interface is coupled to the processor, and the processor is configured to run a program or instructions to implement the steps of the terminal-side method embodiments. The communication interface is configured to receive first indication information sent by a network-side device, where the first indication information is used to indicate whether to deactivate a first time region, and the first time region includes at least one first time unit in which transmission restriction is applied to a terminal. The processor is configured to, in a case that the first indication information indicates to deactivate the first time region, deactivate at least part of the first time units in the first time region based on a target time, where the target time is determined based on an information reception time of the first indication information. The terminal embodiment corresponds to the terminal-side method embodiment, and the implementation processes and implementations of the foregoing method embodiments are applicable to the terminal embodiment, with the same technical effects achieved. Specifically, FIG. 13 is a schematic diagram of a hardware structure of a terminal implementing an embodiment of this application.

The terminal 1000 includes but is not limited to: at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system, so as to implement functions such as charging management, discharging management, and power consumption management by using the power management system. The structure of the terminal shown in FIG. 13 does not constitute any limitation on the terminal. The terminal may include more or fewer components than shown in the figure, or a combination of some components, or the components disposed differently. Details are not described herein.

It should be understood that in the embodiments of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or an on/off key), a trackball, a mouse, and a joystick. Details are not described herein.

In the embodiments of this application, after receiving downlink data from the network-side device, the radio frequency unit 1001 can transmit the downlink data to the processor 1010 for processing. In addition, the radio frequency unit 1001 can send uplink data to the network-side device. Typically, the radio frequency unit 1001 includes but is not limited to an antenna, an amplifier, a transceiver, a coupler, a low noise amplifier, and a duplexer.

The memory 1009 may be configured to store a software program or instructions and various data. The memory 1009 may mainly include a first storage area for storing programs or instructions and a second storage area for storing data. The first storage area may store an operating system, an application program or instructions required by at least one function (for example, a sound play function or an image play function), and the like. Additionally, the memory 1009 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 1009 in the embodiment of this application includes but is not limited to these and any other suitable types of memory.

The processor 1010 may include one or more processing units. Optionally, the processor 1010 integrates an application processor and a modem processor. The application processor primarily processes operations involving an operating system, a user interface, an application program, or the like. The modem processor, such as a baseband processor, primarily processes radio communication signals. It can be understood that the modem processor may alternatively be not integrated into the processor 1010.

The radio frequency unit 1001 may be configured to receive first indication information sent by a network-side device, where the first indication information is used to indicate whether to deactivate a first time region, and the first time region includes at least one first time unit in which transmission restriction is applied to a terminal. The processor 1010 may be configured to, in a case that the first indication information indicates to deactivate the first time region, deactivate at least part of the first time units in the first time region based on a target time, where the target time is determined based on an information reception time of the first indication information.

In one possible implementation, the target time is before a start time of the first time region. A start time of the at least part of the first time units may include any one of the following: the start time of the first time region; a start time of a second time region; a start time of N time units, where the N time units are before the second time region and adjacent to the second time region, and N is a positive integer; a start time selected by the terminal. The second time region is: an overlapping time region between the first time region and a time domain transmission resource corresponding to the terminal.

In one possible implementation, the target time is after a start time of the first time region; and a start time of the at least part of the first time units may include any one of the following: the target time; a start time of a second time region that is after the target time; a start time of M time units that are after the target time, where the M time units are before the second time region and adjacent to the second time region, and M is a positive integer; and a start time selected by the terminal after the target time. The second time region is: an overlapping time region between the first time region and a time domain transmission resource corresponding to the terminal.

In one possible implementation, an end time of the at least part of the first time units may include any one of the following: an end time of the first time region; an end time of the second time region; an end time of P time units, where the P time units are after the second time region and adjacent to the second time region, and P is a positive integer; and an end time selected by the terminal based on a target proportion, where the target proportion is a proportion of a length corresponding to all first time units allowed to be deactivated to a time length corresponding to the first time region. The second time region is: an overlapping time region between the first time region and the time domain transmission resource corresponding to the terminal.

In one possible implementation, the first indication information may satisfy at least one of the following: carrying an explicit indication field, where the indication field is used to indicate whether to deactivate the first time region; including second indication information, where the second indication information is used to indicate a time domain transmission resource to the terminal; including third indication information, where the third indication information is used to indicate to the terminal at least one HARQ process corresponding to transmission; carried by first DCI that schedules at least one target channel transmission; and carried by second DCI that does not schedule target channel transmission. The target channel transmission is any one of the following: PDSCH transmission, and PUSCH transmission.

In one possible implementation, the first DCI may further carry fourth indication information, where the fourth indication information is used to indicate activation or deactivation of the first time region.

In one possible implementation, the target channel transmission may satisfy at least one of the following: overlapping in time domain with a time region that is after the reception time of the first DCI in the first time region; associated with a given HARQ process; and associated with a given transmission priority.

In one possible implementation, the first time region may be: a transmission restriction time region that is after the information reception time of the first indication information and closest to the information reception time; or the first time region overlaps with a time domain transmission resource indicated by the first indication information.

In one possible implementation, a frequency range corresponding to the first time region may be at least one of the following: a frequency range on one band; a frequency range on one serving cell; and a frequency range on multiple serving cells.

In one possible implementation, the first time region may be contiguous or non-contiguous.

In one possible implementation, the processor 1010 may be further configured to, after deactivating at least part of the first time units in the first time region based on the target time, perform a first operation within the at least part of the first time units. The first operation includes at least one of the following: receiving a PDCCH scrambled with the terminal-specific RNTI; receiving a DG PDSCH; sending a DG PUSCH; performing a given SPS transmission; and performing a given CG transmission.

In one possible implementation, the processor 1010 may be specifically configured to, in a case that a target condition is satisfied, perform the first operation within the at least part of the first time units. The target condition includes at least one of the following: a measurement result of a target-type measurement signal by the terminal meets a preset threshold; the terminal transmits a specific DL; the terminal transmits a specific UL; the terminal transmits a specific HARQ process; to-be-transmitted data corresponding to an uplink target logical channel exists; to-be-transmitted data corresponding to an uplink target logical channel group exists; the terminal is in DRX on duration; and the terminal starts a target timer.

In one possible implementation, the processor 1010 may be further configured to, before deactivating at least part of the first time units in the first time region based on the target time, determine the target time based on a target delay and the information reception time of the first indication information; where the target delay is an effective delay for deactivating the first time region.

In one possible implementation, the target delay may be determined by at least one of the following: an SCS; a type of an MG; a configuration of the network-side device; and a capability of the terminal.

In the terminal according to the embodiments of this application, since the terminal can deactivate, based on the indication and information reception time of the first indication information, at least part of the first time units in which transmission restriction is applied to the terminal in the first time region, transmission restriction on the terminal can be relaxed within the at least part of the first time units, thereby preventing the interruption of transmission of low-latency services transmitted within the at least part of the first time units, thereby ensuring normal operation of the low-latency services.

It can be understood that for the implementation processes of various implementations mentioned in this embodiment, reference may be made to related descriptions in the terminal-side method embodiments, and the same or corresponding technical effects can be achieved. To avoid repetition, details are not described herein again.

An embodiment of this application further provides a network-side device including a processor and a communication interface, where the communication interface is coupled to the processor, and the processor is configured to run a program or instructions to implement the steps of the network-side device method embodiments. The communication interface is configured to send first indication information to a terminal; where the first indication information is used to indicate whether to deactivate a first time region, and the first time region includes at least one first time unit in which transmission restriction is applied to the terminal. The network-side device embodiment corresponds to the network-side device method embodiment, and various implementation processes and implementations of the foregoing method embodiments are applicable to the network-side device embodiment, with the same technical effects achieved.

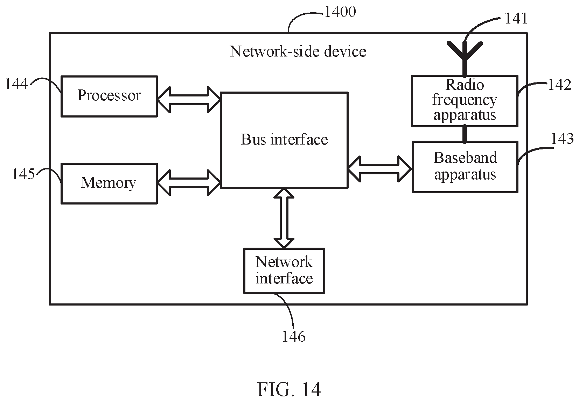

Specifically, an embodiment of this application further provides a network-side device. As shown in FIG. 14, the network-side device 1400 includes: an antenna 141, a radio frequency apparatus 142, a baseband apparatus 143, a processor 144, and a memory 145. The antenna 141 is connected to the radio frequency apparatus 142. In an uplink direction, the radio frequency apparatus 142 receives information through the antenna 141 and sends the received information to the baseband apparatus 143 for processing. In a downlink direction, the baseband apparatus 143 processes information to be sent and sends the information to the radio frequency apparatus 142, and the radio frequency apparatus 142 processes the received information and then sends the information out via the antenna 141.

The method performed by the network-side device in the above embodiments may be implemented in the baseband apparatus 143, where the baseband apparatus 143 includes a baseband processor.

The baseband apparatus 143 may include, for example, at least one baseband board, where multiple chips are disposed on the baseband board. As shown in FIG. 14, one chip is, for example, a baseband processor, and connected to the memory 145 through a bus interface, to invoke the program in the memory 145 to perform the operations of the network device shown in the above method embodiments.

The network-side device may further include a network interface 146. The interface is, for example, a common public radio interface (Common Public Radio Interface, CPRI).

Specifically, the network-side device 1400 of the embodiment of this application further includes: instructions or a program stored on the memory 145 and capable of running on the processor 144. The processor 144 calls the instructions or program in the memory 145 to execute the method performed by modules shown in FIG. 11, with the same technical effects achieved. To avoid repetition, details are not described herein again.

The radio frequency apparatus 142 may be configured to send first indication information to a terminal; where the first indication information is used to indicate whether to deactivate a first time region, and the first time region includes at least one first time unit in which transmission restriction is applied to the terminal.

In one possible implementation, the first indication information may satisfy at least one of the following: carrying an explicit indication field, where the indication field is used to indicate whether to deactivate the first time region; including second indication information, where the second indication information is used to indicate a time domain transmission resource to the terminal; including third indication information, where the third indication information is used to indicate to the terminal at least one HARQ process corresponding to transmission; carried by first DCI that schedules at least one target channel transmission; and carried by second DCI that does not schedule target channel transmission. The target channel transmission is any one of the following: PDSCH transmission, and PUSCH transmission.

In one possible implementation, the first DCI may further carry fourth indication information, where the fourth indication information is used to indicate activation or deactivation of the first time region.

In one possible implementation, the target channel transmission may satisfy at least one of the following: overlapping in time domain with a time region that is after a reception time of the first DCI in the first time region; associated with a given HARQ process; and associated with a given transmission priority.

In one possible implementation, the first time region may be: a transmission restriction time region that is after an information reception time of the first indication information and closest to the information reception time; or the first time region overlaps with a time domain transmission resource indicated by the first indication information.

In one possible implementation, a frequency range corresponding to the first time region may be at least one of the following: a frequency range on one band; a frequency range on one serving cell; and a frequency range on multiple serving cells.

In one possible implementation, the first time region may be contiguous or non-contiguous.

In one possible implementation, the processor 144 may be configured to, after the radio frequency apparatus 142 sends the first indication information to the terminal, perform a second operation within a first time unit deactivated by the terminal. The second operation includes at least one of the following: sending a PDCCH scrambled with the terminal-specific RNTI to the terminal; sending a DG PDSCH to the terminal; receiving a DG PUSCH sent by the terminal; performing a given SPS transmission; and performing a given CG transmission.

In the network-side device according to the embodiments of this application, since the network-side device can send to the terminal first indication information used to indicate whether to deactivate a first time region, and the first time region includes at least one first time unit in which transmission restriction is applied to the terminal, the terminal can deactivate first time units in the first time region based on the first indication information, thereby relaxing transmission restriction on the terminal within the deactivated first time units. This can prevent the interruption of transmission of low-latency services, thereby ensuring normal operation of the low-latency services.

It can be understood that for the implementation processes of various implementations mentioned in this embodiment, reference may be made to related descriptions in the network-side device method embodiments, and the same or corresponding technical effects can be achieved. To avoid repetition, details are not described herein again.

An embodiment of this application further provides a readable storage medium, where the readable storage medium stores a program or instructions, and the program or instructions, when executed by a processor, implement various processes of the transmission restriction adjustment method embodiments, with the same technical effects achieved. To avoid repetition, details are not described herein again.

The processor is the processor in the terminal described in the foregoing embodiment. The readable storage medium includes a computer-readable storage medium, such as a computer read-only memory ROM, a random access memory RAM, a magnetic disk, or a compact disc. In some examples, the readable storage medium may be a non-volatile readable storage medium.

Another embodiment of this application provides a chip, where the chip includes a processor and a communication interface, the communication interface is coupled to the processor, and the processor is configured to run a program or instructions to implement various processes of the transmission restriction adjustment method embodiments, with the same technical effects achieved. To avoid repetition, details are not described herein again.

It should be understood that the chip mentioned in the embodiments of this application may also be called a system-level chip, a system chip, a chip system, a system-on-chip, or the like.

Another embodiment of this application provides a computer program/program product, where the computer program/program product is stored in a storage medium, and the computer program/program product is executed by at least one processor to implement each process of the embodiments of the foregoing transmission restriction adjustment method, with the same technical effect achieved. To avoid repetition, details are not described herein again.

An embodiment of this application further provides a communication system including: a terminal and a network-side device, where the terminal may be configured to perform the steps of the foregoing terminal-side method, and the network-side device may be configured to perform the steps of the foregoing network-side device method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiment may also be implemented by hardware. The computer software product is stored in a storage medium (such as a ROM, a RAM, a magnetic disk, or a compact disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A transmission restriction adjustment method, wherein the method comprises:
receiving, by a terminal, first indication information sent by a network-side device, wherein the first indication information is used to indicate whether to deactivate a first time region, and the first time region comprises at least one first time unit in which transmission restriction is applied to the terminal; and
in a case that the first indication information indicates to deactivate the first time region, deactivating, by the terminal, at least part of the first time units in the first time region based on a target time, wherein the target time is determined based on an information reception time of the first indication information.

2. The method according to claim 1, wherein the target time is before a start time of the first time region; and
a start time of the at least part of the first time units comprises any one of the following:
the start time of the first time region;
a start time of a second time region;
a start time of N time units, wherein the N time units are before the second time region and adjacent to the second time region, and N is a positive integer; and
a start time selected by the terminal; wherein
the second time region is: an overlapping time region between the first time region and a time domain transmission resource corresponding to the terminal.

3. The method according to claim 1, wherein the target time is after a start time of the first time region; and
a start time of the at least part of the first time units comprises any one of the following:
the target time;
a start time of a second time region that is after the target time;
a start time of M time units that are after the target time, wherein the M time units are before the second time region and adjacent to the second time region, and M is a positive integer; and
a start time selected by the terminal after the target time; wherein
the second time region is: an overlapping time region between the first time region and a time domain transmission resource corresponding to the terminal.

4. The method according to any one of claims 1 to 3, wherein an end time of the at least part of the first time units comprises any one of the following:
an end time of the first time region;
an end time of the second time region;
an end time of P time units, wherein the P time units are after the second time region and adjacent to the second time region, and P is a positive integer; and
an end time selected by the terminal based on a target proportion, wherein the target proportion is a proportion of a length corresponding to all first time units allowed to be deactivated to a time length corresponding to the first time region; wherein
the second time region is: an overlapping time region between the first time region and the time domain transmission resource corresponding to the terminal.

5. The method according to any one of claims 1 to 3, wherein before the deactivating, by the terminal, at least part of the first time units in the first time region based on a target time, the method further comprises:
determining, by the terminal, the target time based on a target delay and the information reception time of the first indication information; wherein
the target delay is an effective delay for deactivating the first time region.

6. The method according to claim 5, wherein the target delay is determined by at least one of the following:
a subcarrier spacing SCS;
a type of a measurement gap MG;
a configuration of the network-side device; and
a capability of the terminal.

7. The method according to claim 1, wherein the first indication information satisfies at least one of the following:
carrying an explicit indication field, wherein the indication field is used to indicate whether to deactivate the first time region;
comprising second indication information, wherein the second indication information is used to indicate a time domain transmission resource to the terminal;
comprising third indication information, wherein the third indication information is used to indicate to the terminal at least one hybrid automatic repeat request HARQ process corresponding to transmission;
carried by first downlink control information DCI that schedules at least one target channel transmission; and
carried by second DCI that does not schedule target channel transmission; wherein
the target channel transmission is any one of the following: physical downlink shared channel PDSCH transmission, and physical uplink shared channel PUSCH transmission.

8. The method according to claim 7, wherein the first DCI further carries fourth indication information, wherein the fourth indication information is used to indicate activation or deactivation of the first time region.

9. The method according to claim 7, wherein the target channel transmission satisfies at least one of the following:
overlapping in time domain with a time region that is after a reception time of the first DCI in the first time region;
associated with a given HARQ process; and
associated with a given transmission priority.

10. The method according to any one of claims 1 to 3, wherein the first time region is: a transmission restriction time region that is after the information reception time of the first indication information and closest to the information reception time; or the first time region overlaps with a time domain transmission resource indicated by the first indication information.

11. The method according to any one of claims 1 to 3, wherein a frequency range corresponding to the first time region is at least one of the following:
a frequency range on one band;
a frequency range on one serving cell; and
a frequency range on multiple serving cells.

12. The method according to any one of claims 1 to 3, wherein the first time region is contiguous or non-contiguous.

13. The method according to any one of claims 1 to 3, wherein after the deactivating, by the terminal, at least part of the first time units in the first time region based on a target time, the method further comprises:
performing, by the terminal, a first operation within the at least part of the first time units; wherein
the first operation comprises at least one of the following:
receiving a physical downlink control channel PDCCH scrambled with the terminal-specific radio network temporary identity RNTI;
receiving a dynamic grant DG PDSCH;
sending a DG PUSCH;
performing a given semi-persistent scheduling SPS transmission; and
performing a given configured grant CG transmission.

14. The method according to claim 13, wherein the performing, by the terminal, a first operation within the at least part of the first time units comprises:
in a case that a target condition is satisfied, performing, by the terminal, the first operation within the at least part of the first time units; wherein
the target condition comprises at least one of the following:
a measurement result of a target-type measurement signal by the terminal meets a preset threshold;
the terminal transmits a specific downlink DL;
the terminal transmits a specific uplink UL;
the terminal transmits a specific HARQ process;
to-be-transmitted data corresponding to an uplink target logical channel exists;
to-be-transmitted data corresponding to an uplink target logical channel group exists;
the terminal is in discontinuous reception DRX on duration; and
the terminal starts a target timer.

15. A transmission restriction adjustment method, wherein the method comprises:
sending, by a network-side device, first indication information to a terminal; wherein
the first indication information is used to indicate whether to deactivate a first time region, and the first time region comprises at least one first time unit in which transmission restriction is applied to the terminal.

16. The method according to claim 15, wherein the first indication information satisfies at least one of the following:
carrying an explicit indication field, wherein the indication field is used to indicate whether to deactivate the first time region;
comprising second indication information, wherein the second indication information is used to indicate a time domain transmission resource to the terminal;
comprising third indication information, wherein the third indication information is used to indicate to the terminal at least one HARQ process corresponding to transmission;
carried by first DCI that schedules at least one target channel transmission; and
carried by second DCI that does not schedule target channel transmission; wherein
the target channel transmission is any one of the following: PDSCH transmission, and PUSCH transmission.

17. The method according to claim 16, wherein the first DCI further carries fourth indication information, wherein the fourth indication information is used to indicate activation or deactivation of the first time region.

18. The method according to claim 16, wherein the target channel transmission satisfies at least one of the following:
overlapping in time domain with a time region that is after a reception time of the first DCI in the first time region;
associated with a given HARQ process; and
associated with a given transmission priority.

19. The method according to any one of claims 15 to 18, wherein the first time region is: a transmission restriction time region that is after an information reception time of the first indication information and closest to the information reception time; or the first time region overlaps with a time domain transmission resource indicated by the first indication information.

20. The method according to any one of claims 15 to 18, wherein a frequency range corresponding to the first time region is at least one of the following:
a frequency range on one band;
a frequency range on one serving cell; and
a frequency range on multiple serving cells.

21. The method according to any one of claims 15 to 18, wherein the first time region is contiguous or non-contiguous.

22. The method according to claim 15, wherein after the sending, by a network-side device, first indication information to a terminal, the method further comprises:
performing, by the network-side device, a second operation within a first time unit deactivated by the terminal; wherein
the second operation comprises at least one of the following:
sending a PDCCH scrambled with the terminal-specific RNTI to the terminal;
sending a DG PDSCH to the terminal;
receiving a DG PUSCH sent by the terminal;
performing a given SPS transmission; and
performing a given CG transmission.

23. A transmission restriction adjustment apparatus, wherein the apparatus comprises a receiving module and a processing module; wherein
the receiving module is configured to receive first indication information sent by a network-side device, wherein the first indication information is used to indicate whether to deactivate a first time region, and the first time region comprises at least one first time unit in which transmission restriction is applied to a terminal; and
the processing module is configured to, in a case that the first indication information indicates to deactivate the first time region, deactivate at least part of the first time units in the first time region based on a target time, wherein the target time is determined based on an information reception time of the first indication information.

24. A transmission restriction adjustment apparatus, wherein the apparatus comprises a sending module; wherein
the sending module is configured to send first indication information to a terminal; wherein
the first indication information is used to indicate whether to deactivate a first time region, and the first time region comprises at least one first time unit in which transmission restriction is applied to the terminal.

25. A terminal, comprising a processor and a memory, wherein the memory stores a program or instructions capable of running on the processor, and the program or instructions, when executed by the processor, implement steps of the transmission restriction adjustment method according to any one of claims 1 to 14.

26. A network-side device, comprising a processor and a memory, wherein the memory stores a program or instructions capable of running on the processor, and the program or instructions, when executed by the processor, implement steps of the transmission restriction adjustment method according to any one of claims 15 to 22.

27. A readable storage medium, wherein the readable storage medium stores a program or instructions, and the program or instructions, when executed by a processor, implement the transmission restriction adjustment method according to any one of claims 1 to 14, or implement steps of the transmission restriction adjustment method according to any one of claims 15 to 22.
